# EUROPÄISCHE PATENTANMELDUNG

(11) **EP 0 539 710 A1**
(43) Veröffentlichungstag der Anmeldung: **05.05.1993**
(21) Anmeldenummer: 92115871.3
(22) Anmeldetag: 17.09.1992
(51) Int. Cl.: C08J 3/07, C09D 123/28

(54) **Chlorierte Polyolefine enthaltende wässrige Emulsionen und Überzugsmittel, und deren Verwendung als Haftgrundierungsmittel für die Beschichtung von Kunststoffen**

(30) Priorität: 19.09.1991 DE 4131127
(71) Anmelder: Herberts Gesellschaft mit beschränkter Haftung, D-42285 Wuppertal (DE); Th. Goldschmidt AG, D-45127 Essen (DE)
(72) Erfinder: Obloh, Ronald, Dr., W-4600 Dortmund 16 (DE); Keup, Michael, Dr., W-4300 Essen 1 (DE); Sucker, Roland, W-4712 Werne (DE); Emmerich, Hans-Norbert, W-5591 Illerich (DE)
(74) Vertreter: Türk, Gille, Hrabal, Leifert

(57) **Zusammenfassung**

1. Wäßrige Emulsionen auf der Basis von chlorierten Polyolefinen, deren Herstellung, diese enthaltende Überzugsmittel und deren Verwendung.

2.1. Wäßrige Grundierungen auf der Basis chlorierter Polyolefine weisen eine unzureichende Haftung auf Kunststoffsubstraten auf. Dies wird vermieden durch
2.2. lösemittelhaltige wäßrige Emulsionen, die 10 bis 30 Gew% eines oder mehrerer chlorierter Polyolefine, 10 bis 50 Gew% eines oder mehrerer aromatischer Lösungsmittel, 1 bis 6 Gew% eines oder mehrerer Emulgatoren und 24 bis 64 Gew% Wasser enthalten.

2.3. Herstellung von Haftgrundierungen auf Kunststoffsubstraten.

## Beschreibung

Die Erfindung betrifft wäßrige Emulsionen und Überzugsmittel auf der Basis chlorierter Polyolefine, die als Haftgrundierungsmittel für die Lackierung von Kunststofformteilen geeignet sind.

Kunststofformteile werden in erheblichem Umfang bei der Herstellung von Automobilen und als Bau- und Verkleidungsteile von Maschinen verwendet. Die Kunststofformteile können aus unterschiedlichen Polymeren bestehen. Beispiele geeigneter Polymerer sind Polyolefine, wie Polypropylen, Polystyrole, Polyvinylchloridpolymerisate, Acrylnitril-Butadien-Styrol-Copolymere, Polyurethane, Polyamide, Polyester, wie Polyethylenterephthalate und Polycarbonate. Dabei können die vorgenannten Kunststoffe durch Einlegen von geeigneten Fasern, insbesondere Glasfasern, verstärkt werden.

Formteile aus den Kunststoffen weisen günstige mechanische Eigenschaften auf, sind jedoch schlecht zu lackieren, da die üblichen Lackbindemittelsysteme auf den Kunststofformteilen ungenügende Haftung aufweisen.

Man hat bereits zur Verbesserung der Haftung von Lacken auf Kunststofformteilen die Verwendung von Haftvermittlern beschrieben, wobei sich als geeignete Haftvermittler insbesondere chlorierte Polyolefine (CPO) bewährt haben. Der Chlorierungsgrad üblicherweise verwendeter chlorierter Polyolefine beträgt insbesondere 10 bis 40 Gew.-%, bezogen auf chloriertes Polymer. Dabei wird das chlorierte Polyolefin in geeigneten Lösungsmitteln gelöst und entweder dem Lack zugegeben oder in Form eines Primers vor der Lackierung auf der Oberfläche des Kunststofformteiles aufgebracht.

Aus der DE-OS 39 10 901 ist eine wäßrige Beschichtungszusammensetzung für Kunststofformteile bekannt, welche Wasser, ein filmbildendes Bindemittelsystem, Pigmente und übliche Hilfsstoffe enthält und dadurch gekennzeichent ist, daß sie eine wäßrige feinteilige Dispersion chlorierter Polyolefine mit einem Schmelzbereich von 80 bis 100°C und einem Chlorierungsgrad des Polymeren von 20 bis 35 Gew%, bezogen auf Polymer, enthält. Die Dispersion wird durch Destillation von Lösungen oder Dispersionen des CPO bis zur Schmelze, Neutralisieren des Säuregehalts der Polymerschmelze, Zusatz eines Emulgators und Einbringen von Wasser in die Polymerschmelze, hergestellt. Man erhält eine lösungsmittelfreie Emulsion. Die Entfernung des Lösungsmittels aus einer Lösung durch Destillation ist aber ein schwieriger und aufwendiger Verfahrensschritt. Außerdem hat es sich gezeigt, daß bei Verwendung von auf diese Weise bereiteten wäßrigen Beschichtungszusammensetzungen die Haftung der Beschichtungsmittel auf Kunststoffteilen insbesondere aus Polyolefinen unzureichend ist.

Aufgabe der Erfindung ist daher die Bereitstellung eines wäßrigen Haftgrundierungsmittels für die Lackierung von Kunststoffen, insbesondere von Kunststofformteilen auf der Basis von chlorierten Polyolefinen, das zur Herstellung von Haftgrundierungen geeignet ist, die ein gutes Haftvermögen auf Kunststoffen aufweisen.

Es hat sich überraschenderweise gezeigt, daß ein geeignetes Haftgrundierungsmittel mit guten Haftungseigenschaften dann erhalten wird, wenn das Haftgrundierungsmittel eine wäßrige, aromatisches Lösungsmittel enthaltende Emulsion eines oder mehrer CPO enthält. Das CPO wird über eine bindemittelfreie, stabile, lösungsmittelhaltige, wäßrige Emulsion in das Haftgrundierungsmittel eingebracht. Diese kann durch Emulgieren einer Lösung von CPO in aromatischen Lösungsmitteln mit einem Emulgator durch Bilden einer Voremulsion hergestellt werden, die unter hohem Energieeintrag in eine stabile wäßrige Emulsion überführt wird.

Gegenstand der Erfindung ist deshalb eine Emulsion von chlorierten Polyolefinen, die dadurch gekennzeichnet ist, daß sie

| | |
|---|---|
| 10 bis 30 Gew% | eines oder mehrerer chlorierter Polyolefine, |
| 25 bis 50 Gew% | eines oder mehrerer aromatischer Lösungsmittel, |
| 1 bis 6 Gew% | eines oder mehrerer Emulgatoren, und |
| 24 bis 64 Gew% | Wasser |

enthält.

Als CPO können die aus dem Stand der Technik bekannten und üblicherweise verwendeten chlorierten Polyolefine, wie chloriertes Polyethylen, chloriertes Polypropylen oder chloriertes Polyethylen/propylencopolymer, oder Gemische davon verwendet werden. Vorzugsweise hat das chlorierte Polyolefin einen Chlorierungsgrad von 15 bis 35 Gew%. Es liegt bei seiner Herstellung oder im Handel als Pulver, als wäßrige Slurry oder in aromatischen Lösungsmitteln gelöst vor. Bevorzugt sind Lösungen in aromatischen Lösungsmitteln.

Als aromatische Lösungsmittel sind Toluol und Xylol bevorzugt. Es können jedoch auch andere aromatische Lösungsmittel oder Lösungsmittelgemische eines Siedebereiches von etwa 110 bis 150^{o}C verwendet werden. Die Lösungsmittel werden in Form einer CPO-Lösung zugegeben oder sie werden beim Herstellen der Voremulsion zugefügt. Gegebenenfalls kann der Gehalt an Lösungmitteln durch beide Arbeitsweisen gezielt eingestellt werden.

Besonders geeignete Emulgatoren sind anionaktive Emulgatoren eines HLB-Wertes von > 16. Solche Emulgatoren sind handelsüblich. Beispiele dafür sind Alkylcarboxylate, z.B. Polyglykolcarboxylate oder Fettsäurederivate; Alkylbenzosulfonate oder Alkylsulfonate, z.B. C₈-C₂₀ n-Alkylbenzosulfonate, gesättigte oder ungesättigte, primäre oder sekundäre C₁₀-C₂₅ Alkylsulfonate, α-Sulfo-Bernsteinsäureester mit Alkylresten von C₈-C₁₅; Alkylsulfate, z.B. primäre oder sekundäre, lineare oder verzweigte C₈-C₁₈ Alkylsulfonate; oder Alkylphosphate mit höherkettigen Alkylresten. Die Verbindungen liegen im allgemeinen als K⁺ oder Na⁺ oder Ammoniumsalz vor. Besonders bewährt haben sich dabei die Sulfonate. Bevorzugt werden als Emulgatoren sekundäre Alkylsulfonate verwendet.

Besonders bevorzugt ist eine Emulsion folgender Zusammensetzung:

| | |
|---|---|
| 10 bis 20 Gew% | chloriertes Polyolefin, |
| 30 bis 40 Gew% | aromatisches Lösungsmittel, |
| 2 bis 4 Gew% | Emulgator, |
| 38 bis 54 Gew% | Wasser. |

Die erfindungsgemäße wäßrige, aromatische Lösungsmittel enthaltende CPO-Emulsion wird (entsprechend einem zweiten Gegenstand vorliegender Erfindung) vorzugsweise dadurch hergestellt, daß man das chlorierte Polyolefin in dem aromatischen Lösungsmittel oder in einem Teil des aromatischen Lösungsmittels löst. Diese Lösung wird in eine Lösung oder Dispersion des Emulgators in Wasser eingerührt. Dabei kann man zunächst eine konzentrierte Lösung oder Dispersion des Emulgators vorlegen und das restliche Wasser sowie gegebenenfalls das restliche Lösungsmittel anschließend kontinuierlich oder portionsweise zugeben. Man erhält eine Voremulsion, die dann mittels einer Homogenisiervorrichtung homogenisiert wird. Beispielsweise besonders bewährt hat sich dabei die Verwendung eines Hochdruckhomogenisators, wobei die Homogenisierung bei einem Spaltdruck von 150 bis 250 bar erfolgt.

Es ist bevorzugt, die Herstellung der Voremulsion und/oder die Emulgierung bei erhöhter Temperatur, z.B. 40 bis 50^{o}C, durchzuführen.

Die entstehende Emulsion zeichnet sich durch eine gute monomodale Verteilung der Teilchengröße in der Wasserphase aus. Die Emulsionen sind stabil und zeigen trotz des Lösungsmittelgehaltes keine Koaleszenzerscheinungen bei Lagerung.

Die erfindungsgemäße Emulsion ist sofort nach der Herstellung verarbeitungsfähig und hat im allgemeinen eine Viskosität von 12 bis 20 Sekunden in einem Auslaufbecher mit 4 mm-Düse nach DIN 53 211.

Die erfindungsgemäße Emulsion kann als Haftgrundierungsmittel verwendet oder zur Herstellung von Haftgrundierungsmitteln verarbeitet werden. Sollte eine separat aufgebrachte Haftgrundierungsbeschichtung nicht erwünscht sein, ist es auch möglich, die erfindungsgemäßen CPO-Emulsionen (als Additive) einem üblichen Beschichtungsmittel zuzusetzen. Auch in diesem Falle wird eine verbesserte Haftung auf Kunststoffsubstraten erzielt.

Aus den erfindungsgemäßen Emulsionen können sofort oder nach Lagerung Haftgrundierungsmittel hergestellt werden. Das Haftgrundierungsmittel enthält beispielsweise die erfindungsgemäße wäßrige, aromatische Lösungsmittel enthaltende Emulsion eines oder mehrerer CPO-Harze, Pigmente und/oder Füllstoffe und ein oder mehrere wasserdispergierbare oder wasserlösliche übliche filmbildende Harz sowie gegebenenfalls weitere lacktechnische Additive.

Der Pigmentgehalt des Haftgrundierungsmittels beträgt bevorzugt weniger als 30 Gew%, bezogen auf den Festkörper des Grundierungsmittels. Der Gehalt an aromatischen Lösungsmitteln beträgt bevorzugt 15 bis 45 Gew%, der CPO-Gehalt beträgt bevorzugt 2 bis 30 Gew%. Der Bindemittelanteil beträgt bevorzugt weniger als 20 Gew% jeweils bezogen auf das gesamte Haftgrundierungsmittel. Bevorzugt ist eine Zusammensetzung des Haftgrundierungsmittels, die

| | |
|---|---|
| 7,5 - 20 Gew% | eines oder mehrerer chlorierter Polyolefine |
| 25 - 40 Gew% | eines oder mehrerer aromatischer Lösungsmittel |
| 1,5 - 5 Gew% | eines oder mehrerer Emulgatoren und gegebenenfalls weitere Additive |
| 0,5 - 5 Gew% | eines oder mehrerer filmbildende Bindemittel |
| 1 - 10 Gew% | Pigmente und/oder Füllstoffe und |
| 30 - 60 Gew% | Wasser |

enthält.

Zur Herstellung der Haftgrundierungsmittel können die erfindungsgemäßen Emulsionen mit den weiteren Bestandteilen, beispielsweise unter Rühren, vermischt werden. In gleicher Weise können die erfindungsgemäßen Emulsionen (bei Verwendung als Additive) mit üblichen Beschichtungsmitteln vermischt werden.

Als filmbildende Bindemittel sind wasserlösliche oder wasserdispergierbare Harze geeignet, wie sie üblicherweise auf dem Gebiet wäßriger Überzugsmittel eingesetzt werden. Es handelt sich dabei um physikalisch trocknende nicht-vernetzende filmbildende Bindemittel. Beispiele dafür sind Polyurethanharze, Acrylharze, Polycarbonate, Polyesterharze oder Mischungen davon. Bevorzugt sind Polyurethanharze.

Die Bindemittel haben bevorzugt ein zahlenmittleres Molekulargewicht (Mn) von 500 bis 500000, besonders bevorzugt von 1000 bis 200000. Sie sind wasserdispergierbar oder wasserlöslich, d.h., sie können zusammen mit Emulgatoren in die Wasserphase überführt werden oder sie besitzen einreagierte die Emulgierung oder Auflösung fördernde Gruppen. Das können beispielsweise ionische Gruppen sein, wie z.B. neutralisierte Carboxylgruppen, oder es können nichtionische hydrophile Gruppen sein, wie z.B. Polyetherstrukturen.

Als Polyurethankomponente sind handelsübliche wasserverdünnbare Polyurethanbindemittel geeignet. Die Polyurethanbindemittel sind nicht vernetzt. Sie enthalten im allgemeinen keine weiteren reaktiven Gruppen. Die Löslichkeit der Polyurethanbindemittel wird über Emulgatoren oder über einreagierte ionische Gruppen sichergestellt. Bevorzugt enthalten die Polyurethanbindemittel anionische Anteile, die nach Neutralisation mit Basen eine Überführung in die Wasserphase ermöglichen. Die Polyurethanbindemittel können in weiten Grenzen chemisch modifiziert sein.

Beispiele für Polyurethandispersionen sind in der DE-A-39 36 794, der EP-A-297 576 und der DE-A-32 10 051 beschrieben. Es handelt sich bei diesen Beispielen um Bindemittel, die aus Polyurethanpolyharnstoffen bestehen. Diese Bindemittel können in eine Dispersionsphase überführt werden.

Weitere wasserverdünnbare Polyurethanharze sind in der DE-A-40 00 889 beschrieben. Es handelt sich um Reaktionsprodukte auf Basis Diiscoyanaten mit Polyhydroxylalkansäuren und Polyesterpolyolen.

Weitere Polyurethandispersionen sind in den EP-A 0 089 497, US-PS 4,147,679 oder DE-A-24 46 440 beschrieben. Als Ausgangsverbindung zu deren Herstellung können dabei z.B. auch Polyester oder Polyether eingesetzt werden. Es handelt sich in diesem Falle um wäßrige Polyurethandispersionen, die mit einreagierten neutralisierbare Gruppen enthaltenden Verbindungen hergestellt werden.

Die Harze können linear, verzweigt oder gegebenenfalls auch teilweise vernetzt sein. Die Herstellung der Polyurethane ist in weiten Grenzen variierbar. Durch Einsatz verschiedener Ausgangsverbindungen können die Eigenschaften in weiten Bereichen variiert werden. So sind z.B. Haftung, Viskositätsverhalten oder Benetzungsfähigkeit über die Auswahl der Rohstoffe zu beeinflussen. Die Polyurethanharze bilden entweder nach Neutralisation oder zusammen mit Emulgatoren wäßrige Dispersionen.

Die Bindemittel können einzeln oder im Gemisch vorliegen. Sie bilden in Wasser stabile Dispersionen. Enthalten sie hydrophile, gut benetzende Gruppen, so sind sie auch geeignet zur Stabilisierung von dispergiertem Pigment in wäßriger Phase. Es werden insbesondere keine vernetzenden Harze eingesetzt.

Die erfindungsgemäßen Haftgrundierungsmittel sind stabile Dispersionen und auch nach Lagerung über längere Zeit nur gering sedimentierend und weiter verwendungsfähig. Die erfindungsgemäßen Haftgrundierungsmittel können beispielsweise durch Streichen, Tauchen oder Spritzen appliziert werden. Danach erfolgt eine Trocknung entweder bei Raumtemperatur oder bei erhöhter Temperatur, beispielsweise bis ca. 100^{o}C. Die Schichtdicke beträgt beispielsweise 0,2 - 35 µm, bevorzugt 1 - 10 µm.

Nach dem Aufbringen auf das Kunststoffsubstrat werden die Überzugsfilme getrocknet. Das kann bei Raumtemperatur geschehen oder durch Erwärmen beschleunigt werden. Dabei kann auf die Temperaturempfindlichkeit des Substrats abgestimmt werden.

Die Haftgrundierungsmittel dienen zum Beschichten von Kunststoffsubstraten, wie sie beispielsweise einleitend erwähnt wurden, besonders in der Automobilindustrie. Sie können jedoch auch anderweitig zur Haftungsverbesserung von Lackierungen auf Kunststoffsubstraten eingesetzt werden. Besonders geeignet sind sie zur Beschichtung von Polyolefinsubstraten, insbesondere Polypropylen. Aus den so hergestellten beschichteten Kunststoffteilen können durch Applikation von weiteren Überzugsschichten Mehrschichtlackierungen hergestellt werden. Dabei ist bei Verwendung eines Haftgrundierungsmittels eine besondere Auswahl der Bindemittel der darauf als Folgeschicht zu applizierenden Überzugsmittel nicht mehr notwending. Die Haftungseigenschaften hängen nicht von den Folgeschichten ab.
Die in dem erfindungsgemäßen Haftgrundierungsmittel enthaltenen reduzierten Mengen an Lösungsmitteln reichen aus, daß die Oberflächen der zu lackierenden Substrate in einem für eine Haftung ausreichenden Maß angequollen werden. Hierdurch wird ein guter Haftverbund zwischen Substrat und Beschichtung erreicht, der alle Anforderungen z.B. der Automobilindustrie, wie etwa eine ausreichende Wasserfestigkeit, gute Steinschlagfestigkeit, auch bei tieferen Temperaturen, sowie eine hinreichende Chemikalienbeständigkeit erfüllt. Die Kunststofformteile, welche unter Verwendung des erfindungsgemäßen Haftgrundierungsmittels behandelt worden sind, bestehen dabei die üblichen Wasseranlagerungs- und Schwitzwassertests bei erhöhter Temperatur.

Anhand der folgenden Beispiele wird die Herstellung der erfindungsgemäßen Emulsionen und Haftgrundierungsmittel gezeigt. Es werden ferner die anwendungstechnischen Eigenschaften eines unter Verwendung der erfindungsgemäßen Haftgrundierungsmittel lackierten Kunststofformteiles untersucht.

### A. Herstellung einer CPO-Emulsion:

### Beispiel 1

31,25 Gew.-Teile einer 40%igen Lösung eines chlorierten Polypropylens mit einem Chlorgehalt von 18 % werden mit 18,75 Gew.-Teilen Xylol auf einen Gehalt von 25 Gew% chlorierten Polypropylens verdünnt. 3,33 Gew.-Teile einer 30 gew%igen Lösung eines handelsüblichen Alkylsulfonates ( Hostapur ® SAS 30 ) werden in 46,67 Gew.-Teilen Wasser gelöst. Die Lösung des chlorierten Polypropylens wird in die wäßrige Emulgatorlösung unter intensivem Rühren während eines Zeitraums von 5 Minuten zugegeben. Es entsteht eine Voremulsion, welche anschließend viermal mit einem Hochdruckhomogenisator bei 200 bar homogenisiert wird.

### Beispiel 2

3,33 Gew.-Teile einer 60 gew%igen Lösung eines handelsüblichen Alkylsulfonates ( Hostapur® SAS 60 ) werden in 46,67 Gew.-Teilen Wasser gelöst. In diese Emulgatorlösung werden unter intensivem Rühren 50,0 Gew.-Teile einer 40%igen Lösung eines chlorierten Polypropylens mit einem Chlorgehalt von 23 % während eines Zeitraums von 10 Minuten zugegeben. Es entsteht eine Voremulsion, welche anschließend viermal mit einem Hochdruckhomogenisator bei 250 bar homogenisiert wird.

### Beispiel 3

25,0 Gew.-Teile einer 40%igen Lösung eines chlorierten Polypropylens mit einem Chlorgehalt von 27 % werden mit 15,0 Gew.-Teilen Xylol auf einen Gehalt von 25,0 Gew% chlorierten Polypropylens verdünnt. 1,33 Gew.-Teile einer 75 gew%igen Lösung eines Alkylarylsulfonates ( Marlon® A 375 ) werden in 58,67 Gew.-Teilen Wasser gelöst. In diese wäßrige Emulgatorlösung wird die Lösung des chlorierten Polypropylens unter intensivem Rühren während eines Zeitraums von 5 Minuten zugegeben. Es entsteht eine Voremulsion, welche anschließend zweimal mit einem Hochdruckhomogenisator bei 150 bar homogenisiert wird.

### Beispiel 4

30,0 Gew.-Teile einer 40%igen Lösung eines chlorierten Polypropylens mit einem Chlorgehalt von 27 % werden mit 30,0 Gew.-Teilen Xylol auf einen Gehalt von 20,0 Gew% chlorierten Polypropylens verdünnt. 3,33 Gew.-Teile einer 60 gew%igen Lösung eines Alkylsulfonates ( Hostapur® SAS 60 ) werden in 36,67 Gew.-Teilen Wasser gelöst. In diese wäßrige Emulgatorlösung wird die Lösung des chlorierten Polypropylens unter intensivem Rühren während eines Zeitraums von 10 Minuten zugegeben. Es entsteht eine Voremulsion, welche anschließend viermal mit einem Hochdruckhomogenisator bei 200 bar homogenisiert wird.

### B. Bindemittelbeispiele:

### Beispiel 5

Es wird eine PU-Dispersion nach DE-A-40 00 889 hergestellt. In einem Reaktionsgefäß mit Innenthermometer und Rückflußkühler werden 1687 g eines linearen gesättigten Polyesters (aufgebaut aus Adipinsäure, sowie Neopentylglykol und Hexandion-1.6 im Molverhältnis 1:1) mit einer Säurezahl unter 1, einer OH-Zahl von 130 und einer Viskosität von 275 mPa.s (gemessen in 80%iger Lösung in Aceton bei 25^{o} C) unter gutem Rühren mit 182,5 g Dimethylolpropionsäure und 535 g trockenem Aceton gemischt. Nach Zusatz von 803 g Dicyclohexylmethan-Diisocyanat wird langsam auf 70^{o}C aufgewärmt. Diese Reaktionstemperatur wird gehalten bis der NCO-Gehalt unter 0,2 % liegt. Nach Abkühlen auf 60^{o} C werden 875 g Butoxyethanol zugegeben und anschließend das Aceton gegebenenfalls unter Anlegen von Vakuum auf einen Festkörper von 75 % abdestilliert (Säurezahl 29). Es wird anschließend bei 80^{o} C ein Gemisch aus 108 g Dimethylaminoethanol und 108 g Wasser in 15 Minuten zugegeben. Danach wird langsam mit 5150 g Wasser verdünnt. Die gewünschte Viskosität von 12 Pa.s wird durch Zusatz von weiteren 3,8 g Dimethylaminoethanol-Wasser-Gemisch eingestellt. Es entsteht eine hochviskose praktische klare Paste mit einem Festkörper von 35 Gew% und einem MEQ-Amin-Wert von 23,5 (mÄquiv. Amin pro 100 g Festharz). Der Neutralisierungsgrad beträgt 81 % und die mittlere Teilchengröße ist 36 µm. Das Molekulargewicht beträgt ca. 1500.

### Beispiel 6

Es wird eine PU-Dispersion hergestellt nach DE 36 28 124, Herstellungsbeispiel 2. In einem Reaktionsgefäß werden 200 g eines linearen Polyesters (aus Adipinsäure, Isophthalsäure mit PHTH, Hexandiol; OH-Zahl 77, Säurezahl 10) mit 80 g Methylethylketon und 53,3 g N-Methylpyrrolidon auf 70^{o}C erwärmt und bei dieser Temperatur 75 g hydriertes Bisphenol A sowie 28,3 g Dimethylolpropionsäure zugesetzt. Es wird auf 120^{o}C erwärmt und 1/2 Std. bei dieser Temperatur gerührt. Anschließend werden bei 70^{o}C 146,7 g Hexamethylendiisocyanat zugesetzt. Nach einer exothermen Phase (T < 90^{o}C) wird der Ansatz solange bei 75^{o}C gehalten, bis die Rest-Isocyanatzahl kleiner als 1,8 ist. Die warme Harzmischung wird in 891 g entionisiertes Wasser und 23,5 g Triethylamin unter starkem Rühren dispergiert. 5 Minuten nach Ende der Harzzugabe werden 10,5 g Propylendiamin-1,3 und 75 g entionisiertem Wasser zugesetzt und der Ansatz 1 Str. gerührt. Diese Dispersion wird auf einen Festkörper von 33 % eingestellt. Das Molekulargewicht des Bindemittels beträgt ca. 120000.

### C. Herstellung der Bindemitteldispersionen :

### Beispiel 7

900 g der PU-Dispersion nach Beispiel 5, 1.422 g vollentsalztes Wasser, 18 g eines handelsüblichen Netzmittels und 1.260 g Aluminiumsilikat (Microtalc IT extra) werden unter einem schnell laufenden Dissolver vermischt. Die Pigmentpastenmischung wird bei 35 bis 40^{o}C einer Perlmühle vermahlen.

### Beispiel 8

900 g einer PU-Dispersion des Beispiels 6, 1.440 g vollentsalztes Wasser, 15 g handelsübliches Netzmittel und 645 g Titandioxyd werden unter einem schnell laufenden Dissolver vermischt. Anschließend wird die Pigmentpaste bei 40 bis 45^{o}C auf einer Perlmühle vermahlen.

### Beispiel 9

800 g einer handelsüblichen nichtionischen PU-Dispersion (Festkörper = 40% DSM, ZB 2081 UZ), 632 g vollentsalztes Wasser, 8 g Netzmittel und 560 g Aluminiumsilikat (Microtalc IT extra) werden unter einem schnell laufenden Dissolver vermischt und anschließend bei 50^{o}C auf einer Perlmühle vermahlen.

### Haftgrundierungsmittel:

90 Teile einer GPO-Emulsion gemäß den Beispielen 1 bis 4 werden mit den in der folgenden Tabelle angegebenen Mengen einer Bindemitteldispersion der Beispiele 7 bis 9 intensiv unter Rühren vermischt. Eine geeignete Viskosität zur Applikation kann gegebenenfalls mit Wasser eingestellt werden.

| 90 Teile der CPO-Emulsion der Beispiele | | | | | |
|---|---|---|---|---|---|
| | | 1 | 2 | 3 | 4 |
| Bindemitteldispersion der Beispiele | 7 | | je 10 T. | | |
| | 8 | je 5 T. | | je 20 T. | |
| | 9 | | je 10 T. | | |

Die resultierenden Grundierungsüberzugsmittel werden mittels Spritzapplikation auf das entfettete Substrat (Hostalen PPR 8008 der Hoechst AG) in 2 bis 5 µm Trockenfilmdicke aufgebracht. Der Film wird 15 min. bei 40^{o}C getrocknet. Danach kann ein handelsüblicher weiterer Lackaufbau erfolgen.

In den folgenden Vergleichsversuchen wird das chlorierte Polyolefin ohne aromatisches Lösungsmittel in eine Emulsion überführt.

### Vergleichsversuch A

20 Gew.-Teile festes chloriertes Polypropylen mit einem Chlorgehalt von 18% werden in eine Lösung von 5,3 Gew.-Teilen einer 30-prozentigen Lösung eines handelsüblichen Alkylsulfonates (Hostapur SAS 30) sowie 74,7 Gew.-Teilen Wasser unter intensivem Rühren während eines Zeitraumes von 5 Minuten eindispergiert. Es entsteht eine Voremulsion, die anschließend 4 Mal mit einem Hochdruckhomogenisator bei 200 bar homogenisiert wird.

### Vergleichsversuch B

12,5 Gew.-Teile festes chloriertes Polypropylen mit einem Chlorgehalt von 18% und einem Molekulargewicht von ca. 15000 werden in 37,5 Gew.-Teilen Tetrahydrofuran gelöst. Die resultierende Lösung wird unter intensivem Rühren innerhalb eines Zeitraumes von 5 Minuten in einer Lösung von 3,3 Gew.-Teilen einer 30-prozentigen Lösung eines handelsüblichen Alkylsulfonates in 46,2 Gew.-Teilen Wasser eingearbeitet. Die gebildete Voremulsion wird 4 Mal über einen Hochdruckhomogenisator bei 200 bar homogenisiert.

Die Emulsionen von Beispiele 1 sowie der Vergleichsversuche A und B werden mittels Spritzapplikation auf das entfettete Substrat (Hostalen PPR 8008) in 3-4 µm Trockenfilmdicke aufgebracht. Der Film wird 15 Minuten bei 40^{o}C getrocknet. Danach kann ein weiterer handelsüblicher Lackaufbau erfolgen.

Lackaufbau:

| | |
|---|---|
| 3 - 5 µm | Haftvermittler gemäß Beispiel |
| 25 µm | 2K-Grundierung |
| 15 µm | Wasserbasislack Diamantsilber 65 120 (Herberts GmbH) |
| 35 µm | 2K-PU-Klarlack 47 891 (Herberts GmbH9 |

Die beschichteten Prüfplatten werden nach 7 Tagen Alterung bei Raumtemperatur durch Gitterschnittprüfung gemäß DIN 53151 auf Haftung auf dem Substrat geprüft. Dafür sind die erfindungsgemäßen Beispiele gut (Kennwert GT 0-2), die beiden Vergleichsversuche zeigen eine starke Enthaftung (Kennwert GT5). Die positiv beurteilten Prüfplatten werden einer weiteren Haftungsprüfung unterzogen.

Nach Alterung der Prüfplatten (7 Tage bei RT) werden die erfindungsgemäß behandelten Platten 240 h einem Kondenswasserprüfklima (DIN 50 017) ausgesetzt. Nach 24 Stunden Regenerationszeit sind die Lackaufbauten unverändert, es ist keine Blasenbildung oder Enthaftung zu sehen, eine Quellung kann nicht festgestellt werden.

## Patentansprüche

1. Lösungsmittelhaltige wäßrige Emulsion auf der Basis von chlorierten Polyolefinen, enthaltend
| | |
|---|---|
| 10 - 30 Gew.-% | eines oder mehrerer chlorierte Polyolefine, |
| 25 - 50 Gew.-% | eines oder mehrerer aromatische Lösungsmittel, |
| 1 - 6 Gew.-% | eines oder mehrerer Emulgatoren, und |
| 24 - 64 Gew.-% | Wasser. |

2. Emulsion nach Anspruch 1, dadurch gekennzeichnet, daß als chloriertes Polyolefin chloriertes Polypropylen enthalten ist.

3. Emulsion nach Anspruch 1, dadurch gekennzeichnet, daß als Emulgator ein anionaktiver Emulgator enthalten ist.

4. Emulsion nach Anspruch 3, dadurch gekennzeichnet, daß als Emulgator ein sekundäres Alkylsulfonat enthalten ist.

5. Emulsion nach einem der Ansprüche 1 bis 4, dadurch gekennzeichnet, daß als Lösungsmittel Toluol und/oder Xylol enthalten ist.

6. Verfahren zur Herstellung einer Emulsion nach einem der Ansprüche 1 bis 5, **dadurch gekennzeichnet,**
daß man ein oder mehrere chlorierte Polyolefine in mindestens einem Teil der in Anspruch 1 angegebenen Menge an aromatischem Lösungsmittel löst, diese Lösung in die Dispersion oder Lösung eines oder mehrerer Emulgatoren in der in Anspruch 1 angegebenen Menge in Wasser einrührt und die so erhaltene Voremulsion gegebenenfalls nach Zugabe der restlichen Menge an Lösungsmittel und/oder Wasser bis zu der in Anspruch 1 angegebenen Menge mittels einer Homogenisierungsvorrichtung homogenisiert.

7. Verfahren nach Anspruch 6, dadurch gekennnzeichnet, daß man die erhaltene Voremulsion mittels eines Hochdruck-Homogenisators bei 150 bis 250 bar homogenisiert.

8. Wäßriges, lösungsmittelhaltiges als Haftgrundierungsmittel zur Beschichtung von Kunststoffen geeignetes Überzugsmittel, enthaltend chlorierte Polyolefine, Pigmente und/oder Füllstoffe, wasserdispergierbare oder wasserlösliche, filmbildende Harze sowie gegebenenfalls weitere lacktechnische Additive, dadurch gekennzeichnet, daß es enthält
| | |
|---|---|
| 2 - 30 Gew% | eines oder mehrerer chlorierte Polyolefine |
| 0 - 20 Gew% | eines oder mehrerer filmbildender nichtvernetzender Harze |
| 15 - 45 Gew% | eines oder mehrerer aromatischer Lösungsmittel |
| bis zu 20 Gew% | Pigmente und/oder Füllstoffe |
| 0,2 - 5 Gew% | eines oder mehrerer Emulgatoren, und gegebenenfalls weitere Additive, und |
| über 25 Gew% | Wasser. |

9. Wäßriges, lösungsmittelhaltiges Überzugsmittel nach Anspruch 8, dadurch gekennzeichnet, daß es eine Emulsion nach einem der Ansprüche 1 bis 5 enthält oder daraus besteht.

10. Wäßriges, lösungsmittelhaltiges Überzugsmittel nach Anspruch 8 oder 9, dadurch gekennzeichnet, daß als Bindemittel ein oder mehrere wasserdispergierbare Poyurethanharze mit einem zahlenmittleren Molekulargewicht von 500 bis 500000 enthalten sind.

11. Wäßriges, lösungsmittelhaltiges Überzugsmittel nach einem der Ansprüche 8 bis 10, dadurch gekennzeichnet, daß der Gehalt an aromatischen Lösungsmitteln 20 - 40 Gew% beträgt.

12. Verwendung der wäßrigen Emulsionen nach einem der Ansprüche 1 bis 5 in Überzugsmitteln.

13. Verwendung der wäßrigen Emulsionen nach einem der Ansprüche 1 bis 5 in Haftgrundierungsmitteln zur Beschichtung von Kunststoffen.

14. Verwendung der wäßrigen Emulsionen nach einem der Ansprüche 1-5 in Haftgrundierungsmitteln zur Beschichtung von Polyolefinen.

15. Verwendung eines Überzugsmittels nach Anspruch 8, 9, 10 oder 11 zur Beschichtung von Kunststofformteilen.
